# EUROPÄISCHE PATENTSCHRIFT

(11) **EP 1 744 977 B1**
(45) Veröffentlichungstag und Bekanntmachung des Hinweises auf die Patenterteilung: **03.11.2010**
(21) Anmeldenummer: 05707471.8
(22) Anmeldetag: 17.02.2005
(51) Int. Cl.: B65G 17/06, B65G 17/24

(54) **PASTEUR MIT FÖRDERBAND**
PASTEURISER WITH CONVEYOR BELT
PASTEURISATEUR A BANDE TRANSPORTEUSE

(30) Priorität: 30.04.2004 DE 102004021262
(43) Veröffentlichungstag der Anmeldung: 24.01.2007
(73) Patentinhaber: Krones Nordic ApS, 2840 Holte (DK)
(72) Erfinder: NIELSEN, Jørgen, Tage, DK-3140 Ålsgårde (DK)
(74) Vertreter: Grünecker, Kinkeldey, Stockmair & Schwanhäusser Anwaltssozietät
(86) Internationale Anmeldenummer: PCT/EP2005/001634
(87) Internationale Veröffentlichungsnummer: WO 2005/108248

(56) Entgegenhaltungen:
- EP-A- 0 916 598
- EP-A- 0 953 522
- EP-A- 0 974 537
- FR-A- 520 422

## Beschreibung

Die Erfindung betrifft einen Pasteur mit einem Förderband gemäss dem Oberbegriff des Anspruchs 1 sowie ein Förderband für einen Pasteur gemäss dem Oberbegriff des Anspruchs 16.

Ein Pasteur mit einem Förderband ist aus der EP 1 348 345 bekannt.

Ein Transportförderer ist zum Transport der zu pasteurisierenden Produkte durch den Pasteur vorgesehen. Derartige Transportförderer sind bis zu mehreren Metern wie etwa 5 oder 6 m breit. Auf diesen Förderer werden Konservendosen, Getränkedosen, Glasflaschen oder Ähnliches langsam durch die verschiedenen Zonen des Pasteurs transportiert, so dass die Produkte hierbei pasteurisiert werden.

Aus der Praxis sind hierfür Förderbänder aus Kunststoffelementen oder Stahlelementen bekannt. Die Elemente sind so zusammengefügt, dass sie ein Förderband mit einer Förderfläche bilden.

Die Förderbänder aus Stahl haben den Nachteil, dass diese sehr schwer und relativ kostenintensiv in der Herstellung sind.

Die Förderbänder aus Kunststoffelementen haben den Nachteil des hohen Verschleißes und dass die Kunststoffelemente durch das häufige Erwärmen und Abkühlen sowie durch den Kontakt mit dem Wasser und darin gelösten Stoffen stark altem, was die Lebensdauer im Vergleich zu den Stahlförderem verkürzt.

Aus der EP 0 953 522 ist beispielsweise eine Fördermatte und eine Fördereinrichtung bekannt. Bei diesem Förderer sind einzelne Kunststoffelemente zu einer Fördermatte zusammengefügt.

Die Nachteile dieses Kunststoffförderers sind dieselben, wie bei den aus der Praxis bekannten Förderbändern aus Kunststoffelementen.

Die EP 0 974 537 A2 offenbart ein Förderband für die Behandlung von Materialien gemäss dem Oberbegriff des Anspruchs 1 bzw. 16.

Die EP 0 916 598 offenbart einen Kettenförderer zum Transport von Produkten entlang einer vorgegebenen Achse.

Aufgabe der vorliegenden Erfindung ist es, einen Pasteur mit einem Förderband sowie ein Förderband zu verbessem.

Diese Aufgabe wird durch einen Pasteur nach Anspruch 1 sowie durch ein Förderband nach Anspruch 16 gelöst.

Das Förderband weist eine aus mehreren metallenen Gliedern zusammengesetzte endlose Struktur auf. Diese Struktur aus metallenen Gliedern ist geeignet, die Zugkräfte, die beim Transport entstehen, aufzufangen, ist formstabil, alterungsbeständig und verschleißarm.

Weiterhin ist die Struktur gegenüber Temperaturschwankungen im Vergleich zu Kunststoffen unempfindlich.

An diese Struktur sind Kunststoffteile gekoppelt, die die Förderfläche bilden.

Die Kunststoffteile sind in der Herstellung relativ kostengünstig und können auch mit komplexen Formen durch beispielsweise Spritzgussverfahren kostengünstig hergestellt werden.

Mit den Kunststoffteilen können größere Flächen gebildet werden, die sich so zur Förderfläche zusammensetzen. Ein derartiger Förderer ist somit altersbeständig, verschleißarm und gleichzeitig kostengünstig.

In einer bevorzugten Ausführungsform sind sowohl quer zur Förderrichtung als auch in der Förderrichtung mehrere Glieder vorgesehen. Durch mehrere Glieder in der Förderrichtung wird die Beweglichkeit des Förderbandes gewährleistet, während durch mehrere Glieder quer zur Förderrichtung die Herstellung und Reparatur vereinfacht wird.

Vorteilhafterweise sind die Kunststoffteile individuell oder nur mit einer geringen Zahl (etwa 5 bis 15) von Kunststoffteilen zusammen an der Struktur befestigt. Dies hat den Vorteil, dass zum Auswechseln eines Kunststoffteils nur dieses selber oder wenige von der Struktur abgekoppelt werden müssen.

Vorteilhafterweise ist je metallenem Glied ein Kunststoffteil vorgesehen. Dies ist vorteilhaft, da jedes Glied für sich genommen starr ist und somit gut geeignet ist, ein Kunststoffteil, das auch starr ist, aufzunehmen.

Es können jedoch auch pro Glied mehrere Kunststoffteile oder pro Kunststoffteil mehrere Glieder vorgesehen sein.

Die Kunststoffteile haben an der Förderfläche vorzugsweise Rippen, die in Förderrichtung verlaufen. Durch solche Rippen ist eine Übergabe von zu pasteurisierendem Gut von dem Förderband auf einen Abförderer leichter möglich, da die Rippen in einen am Ende der Förderstrecke angeordneten Rechen eingreifen können.

Die Struktur umfasst vorteilhafterweise identische Module, wobei jedes Modul mehrere identische Glieder umfasst. Die Glieder eines Moduls sind miteinander befestigt, so dass sie eine Einheit bilden.

Die Zusammenfassung von Gliedern in vormontierte Einheiten in Form von Modulen erlaubt zum einen im Falle der Reparatur ein einfacheres Auswechseln von beispielsweise nur einem Modul und erlaubt weiterhin die Vormontage von handhabbaren und leicht zu transportierenden Einheiten.

Die Module haben an ihren jeweiligen Seiten vorzugsweise Steckverbindungen, mit denen sie mit anderen Modulen verbunden werden können.

Die Ausführungsform der metallenen Glieder ist U-förmige, da sich hierdurch zum einen die Möglichkeit ergibt, die Verbindung mit dem Kunststoffteil an mehreren Stellen vorzunehmen und weiterhin aus diesen U-förmigen Teilen ein quasi Rechteckgitter zusammengesetzt werden kann.

Die Glieder eines Moduls sind mit Verbindungsstäben, die quer zur Förderrichtung verlaufen, verbunden. Mit diesen Verbindungsstäben können die einzelnen Glieder leicht verbunden und auch wieder gelöst werden. Weiterhin erlauben die Verbindungsstäbe die einfache Möglichkeit, auch Rollen anzuordnen, mit denen das Förderband auf einer Stützstruktur abrollen kann.

Die Kunststoffteile sind vorteilhafterweise zum einen durch Vorsprünge, die in Öffnungen des metallenen Glieds eingreifen können, und/oder durch Befestigungsstäbe mit den metallenen Gliedern verbunden.

Die Befestigungsstäbe und/oder die Verbindungsstäbe sind vorteilhafterweise so lang wie ein Modul in Förderrichtung gesehen breit ist. Dies hat den Vorteil, dass zum Auswechseln von den Stäben oder den dadurch verbundenen Teilen nicht die Stäbe über die gesamte Breite des Förderbandes entfernt werden müssen, sondern lediglich die des entsprechenden Moduls.

Vorteilhafte Ausführungsformen der Erfindung sind in den Zeichnungen dargestellt. Dabei zeigt:
- Fig. 1: eine dreidimensionale, schematische Darstellung des Eingangsbereichs eines Pasteurs,
- Fig. 2: eine schematische Schnittzeichnung eines Pasteurs,
- Fig. 3: eine dreidimensionale, schematische Darstellung eines metallenen Glieds,
- Fig. 4: eine dreidimensionale, schematische Darstellung eines metallenen Endglieds,
- Fig. 5: eine dreidimensionale, schematische Darstellung mehrerer zusammengesetz- ter metallener Glieder,
- Fig. 6: eine dreidimensionale, schematische Darstellung eines Moduls,
- Fig. 7: eine dreidimensionale, schematische Darstellung eines Förderbandes,
- Fig. 8: eine dreidimensionale, schematische Darstellung eines Kunststoffteils,
- Fig. 9: eine dreidimensionale, schematische Darstellung eines Kunststoffteils in Ver- bindung mit einem metallenen Glied,
- Fig. 10: eine schematische Schnittzeichnung des Förderbandes und eines Trägers,
- Fig. 11: eine schematische Darstellung von Trägern und Laufrollen.

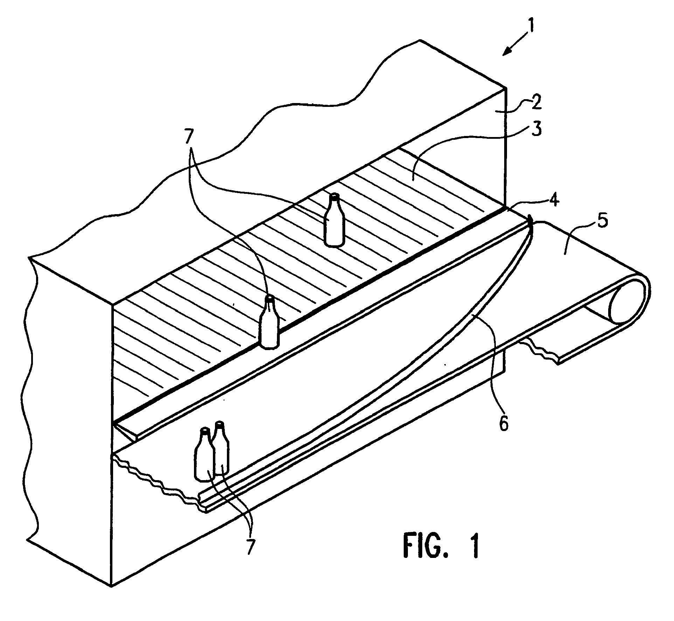

In Fig. 1 ist der Eingangsbereich eines Pasteurs 1 gezeigt. Der Pasteur weist einen Tunnel 2 auf, der mehrere 10 Meter lang sein kann. Durch diesen Tunnel 2 werden die zu pasteurisierenden Produkte wie etwa Flaschen, Konservendosen, Getränkedosen oder Ähnliches hindurchgeführt.

In den Figuren sind beispielhaft Flaschen 7 dargestellt. Die Flaschen 7 werden auf einem Förderband 3 durch den Tunnel 2 hindurch transportiert.

Zu dem Eingangsbereich des Pasteurs 1 führt ein Zuförderer 5. Mit Hilfe eines Geländers 6 werden die Flaschen 7 über den Eingangsbereich des Pasteurs 1 verteilt.

Die Fördergeschwindigkeit des Zuförderers 5 ist in der Regel deutlich höher, als die des Förderbandes 3 des Hauptförderers. Der Hauptförderer arbeitet vergleichsweise langsam, um eine ausreichende Pasteurisationszeit in dem Pasteur 1 zu gewährleisten.

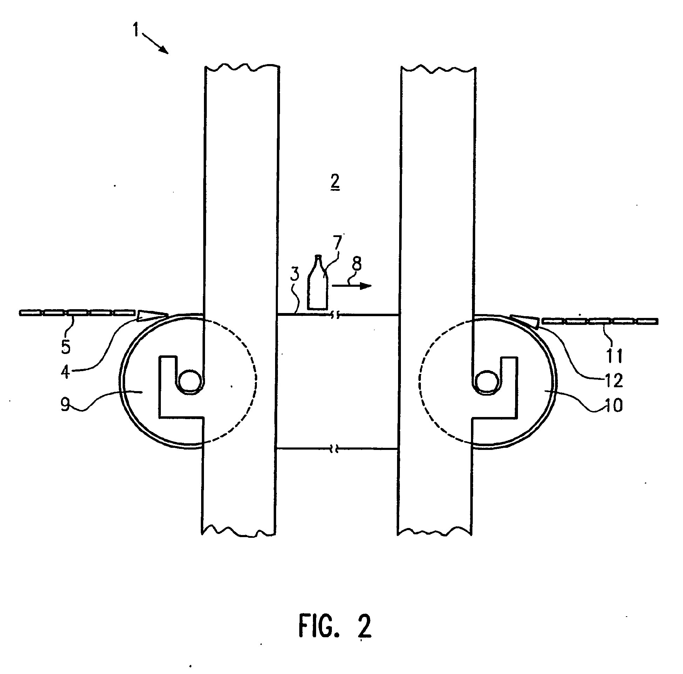

In Fig. 2 ist ein schematischer Schnitt durch einen Pasteur 1 gezeigt. Links ist der Eingangsbereich mit dem Zuförderer 5 dargestellt, während rechts der Ausgangsbereich mit einem Abförderer 11 dargestellt ist. Der Pasteur 1 weist das Förderband 3 auf, das über Walzen 9, 10 geführt ist. Mit dem Förderband 3 werden die Flaschen 7 in Pfeilrichtung 8 (Förderrichtung) vom Eingang zum Ausgang gefördert. Zwischen dem Zuförderer 5 und dem Förderband 3 ist eine Überschubfläche 4 vorgesehen, um den Übergang der Flaschen 7 zu erleichtern bzw. zu ermöglichen. Die Überschubfläche 4 kann zum Förderband 3 hin geneigt sein. Ebenso ist zwischen dem Förderband 3 und dem Abförderer 11 eine Überschubfläche 12 angeordnet. Das Förderband 3 kann mit Rippen versehen sein, die durch entsprechende Schlitze (nicht gezeigt) der Überschubflächen 4 und/oder 12 geführt sind, um den Überschub zu erleichtern. Die Überschubflächen 4,12 sind dann als eine Art Rechen ausgeführt.

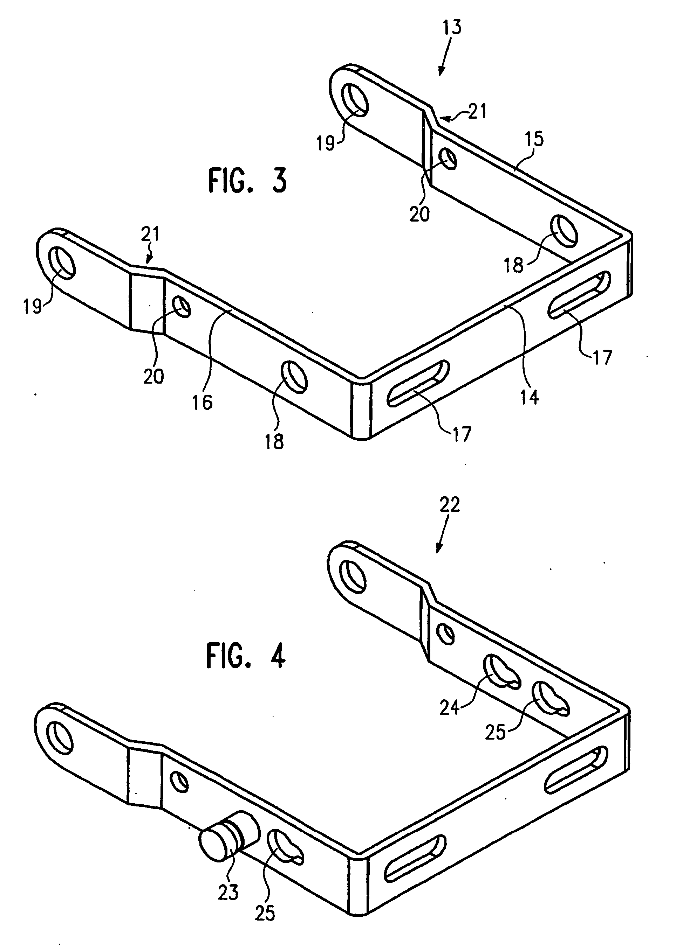

Fig. 3 zeigt ein metallenes Glied 13, mit dem die endlose Struktur des Förderbandes 3 gebildet wird.

Das Glied 13 weist eine U- Form mit seitlichen Schenkeln 15, 16 und einem Verbindungsteil 14 auf.

In den seitlichen Schenkeln 15 und 16 sind Löcher (z. B. Bohrungen) 18, 19 vorgesehen, die dazu dienen, mittels Stäben mehrere Glieder 13 hintereinander zu verbinden.

Weiterhin sind Löcher 20 (z. B. Bohrungen) vorgesehen, die dazu dienen, das Kunststoffteil an dem Glied 13 zu befestigen. Hierzu dienen auch die in dem Verbindungsteil 14 angeordneten Aussparungen 17.

In einem Bereich 21 sind die seitlichen Schenkel 15, 16 gebogen. Dadurch kann ein weiteres metallenes Glied mit seinem Verbindungsteil zwischen die Enden der seitlichen Schenkel 15, 16 gesetzt werden, so dass die Bohrungen 18 eines solchen Teils mit den Bohrungen 19 des in Fig. 3 dargestellten Teils fluchten, um so einen Stab durch die Bohrungen durchzuführen und die Teile so zu verbinden.

In Fig. 4 ist ein zweites metallenes Glied dargestellt, das im Folgenden als Endglied bezeichnet werden soll. Das Endglied 22 hat an einem seitlichen Schenkel zusätzlich einen Zapfen 23 mit einer Nut sowie an dem gegenüberliegenden seitlichen Schenkel eine schlüssellochförmige Öffnung 24. Der Zapfen 23 kann durch den großen Öffnungsteil der Schlüssellochöffnung 24 hindurchgeschoben werden und dann durch eine Nut in dem Zapfen 23 in den schmalen Teil der Schlüssellochöffnung 24 verschoben werden. Statt der Bohrung 18 (siehe Fig. 3) sind hier ebenfalls schlüssellochförmige Öffnungen 25 vorgesehen, deren Funktion weiter unten noch erläutert werden wird.

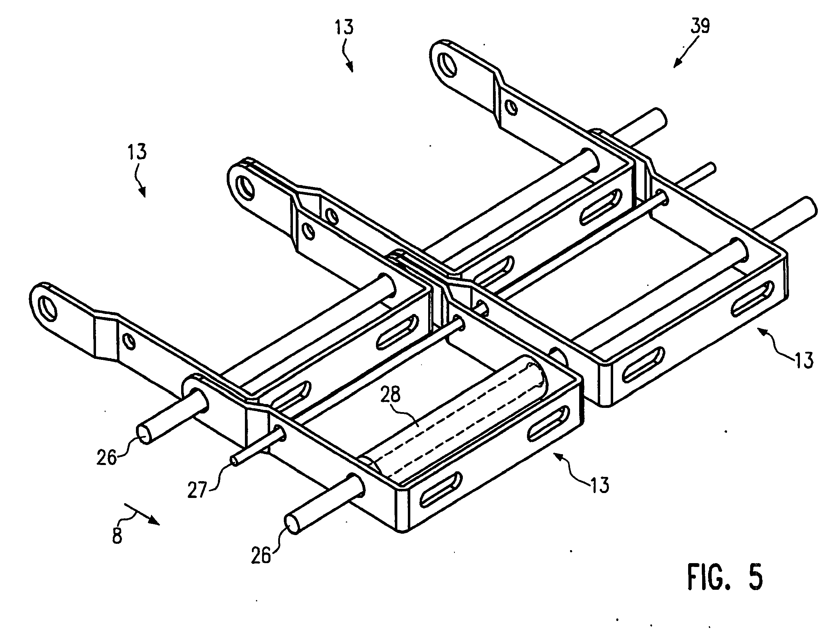

In Fig. 5 ist dargestellt, wie aus den U-förmigen Gliedern 13 eine zweidimensionale Struktur 39 gebildet werden kann.

Verbindungsstäbe 26 führen durch die Öffnungen 19 an den Enden der seitlichen Schenkel 15, 16 eines Glieds 13, wobei zwischen die Enden der Schenkel 15, 16 ein weiteres Glied 13 eingesetzt ist, so dass der Verbindungsstab 26 durch die vorderen Bohrungen 18 des dahinter angeordneten Glieds 13 geht.

In Richtung entlang der Verbindungsstäbe 26 sind mehrere Reihen von miteinander verbundenen Gliedern 13 angeordnet.

Auf den in Fig. 5 unteren Verbindungsstab 26 ist links eine Rolle 28 aufgezogen. Die Rolle 28 ist so dimensioniert, dass sie über den unteren Rand des metallenen Glieds 13 herausragt (nicht dargestellt).

Durch die nebeneinander angeordneten Öffnungen 20 ist ein Verbindungsstab 27 geführt, dessen Funktion im weiteren noch erläutert wird.

In Fig. 5 ist nur die Verbindung von normalen metallenen Gliedern 13 gezeigt, nicht jedoch die von Endgliedem 22.

Um Endglieder 22 (siehe Fig. 4) zu befestigen, weist der Verbindungsstab 26 zwei Nuten auf. Der Verbindungsstab 26 kann durch die großen Öffnungen der Schlüssellochöffnungen 25 hindurchgeführt werden und durch Verschieben des Endglieds 22 so mit dem Endglied 22 verbunden werden, dass die Nuten des Verbindungsstabs 26 in die schmalen Teile der Schlüssellochöffnungen 25 eingreifen bzw. einrasten. Dadurch ist ein Verschieben des Endglieds 22 entlang des Verbindungsstabs 26 ausgeschlossen.

Wird ein Endglied 22 in dieser Weise jeweils an den Enden der Verbindungsstäbe 26 angeordnet, halten diese Endglieder 22 die dazwischen angeordneten normalen Glieder 13, so dass diese nicht von den Stäben 26 herunterrutschen können.

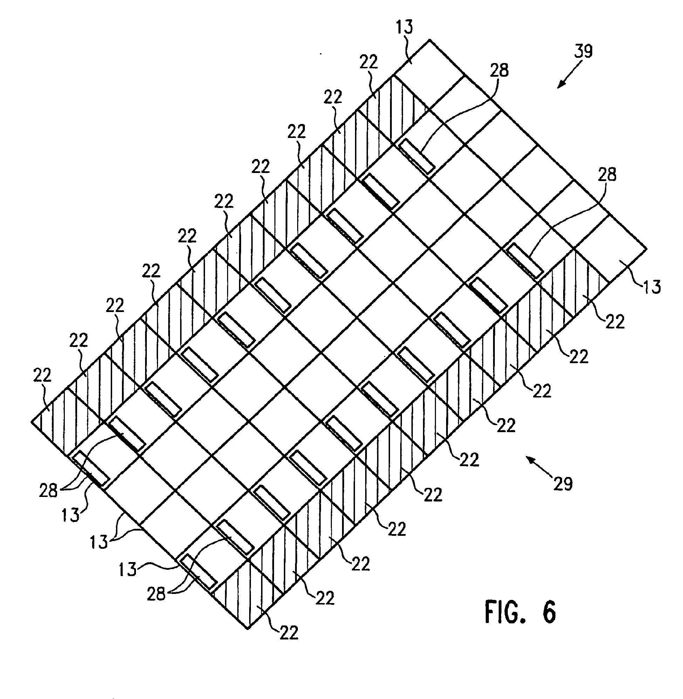

Auf diese Weise ist es möglich, Module 29, wie sie in Fig. 6 dargestellt sind, zusammenzusetzen. Das Modul 29 in Fig. 6 besteht aus sechs Reihen und elf Zeilen von metallenen Gliedern. Ein Teil hiervon sind Endglieder 22, und ein Teil sind normale Glieder 13.

Die Endglieder 22 sind an den Seiten angeordnet und durch eine Schraffur dargestellt. Der Übersichtlichkeit halber sind die Verbindungsstäbe 26 nicht in Fig. 6 gezeigt.

Die Endglieder 22, die mit einer Schlüssellochöffnung 24 nach außen weisen, haben keinen Zapfen 23, da dieser mit dem benachbarten Glied 13 kollidieren würde. Alternativ kann dieses Glied 13 auch eine geeignete Öffnung zur losen oder festen Aufnahme eines doch vorhandenen Zapfens 23 aufweisen, um die Kollision zu vermeiden. Diese Öffnungen können beispielsweise die Öffnungen 18 sein (s. Fig. 3).

In der hintersten Reihe in Fig. 6 sind an den Seiten keine Endglieder 22 vorgesehen sondern normale Glieder 13. Es könnten jedoch auch Endglieder 22 vorgesehen sein.

Die Verbindungsstäbe 26 erstrecken sich über die Breite eines Moduls 29, wie es in Fig. 6 dargestellt ist von einem Endglied 22 zu einem anderen Endglied 22. Dasselbe gilt für die Befestigungsstäbe 27, die in Fig. 6 auch nicht dargestellt sind.

Die Anzahl von Reihen und Zeilen des Moduls 29 in Fig. 6 ist lediglich beispielhaft. Das Modul hat vorzugsweise mindestens 3, 4, 5, 6, 7, 8, 9, oder 10 Reihen, jedoch vorzugsweise nicht mehr als 5, 6, 7, 8, 9, 10, 12, oder 15.

In Fig. 6 sind weiterhin Rollen 28 dargestellt (siehe auch Fig. 5), wobei pro Modul mehr als eine Reihe von metallenen Gliedern 13 mit Rollen 28 bestückt sind. Vorzugsweise sind nicht alle Reihen mit Rollen bestückt.

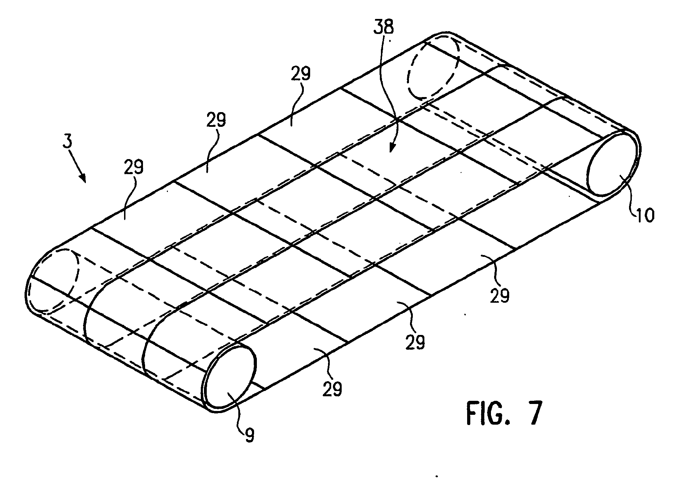

In Fig. 7 ist schematisch dargestellt, wie aus mehreren Modulen 29 das komplette Förderband 3 zusammengesetzt ist. In Fig. 7 sind beispielhaft nebeneinander drei Module angeordnet, es können jedoch auch je nach Größe der Module 29 mehr oder weniger Module 29 sein, wie etwa 2, 4, 5, 6, 7, 8, 9, 10 oder noch mehr. Die Anzahl der Module 29 in Förderrichtung ergibt sich durch die benötigte Länge des Förderbandes 3.

Um die Module 29 seitlich miteinander zu verbinden, dient die Verbindung mit dem Zapfen 23 und Schlüssellochöffnungen 24, wie sie in Fig. 4 dargestellt sind. Die Zapfen 23, können sich in Fig. 6 beispielsweise an der linken oberen Seite befinden und werden mit den Schlüssellochöffnungen 24 eines benachbarten Moduls verbunden.

Um die Module 29, die in Förderrichtung hintereinander liegen, miteinander zu verbinden, werden diese bei der Montage vor Ort mittels Verbindungsstäben 26 zusammengesetzt, so wie dies in Fig. 5 schematisch dargestellt ist. Diese Verbindungsstäbe können die Länge entsprechend der Breite eines Moduls 29 haben oder auch sich über die Breite mehrerer Module oder über die gesamte Förderbandbreite 3 erstrecken.

Mit dieser Konstruktion ist es möglich, Module 29 vorzufertigen, die platzsparend lagenweise in Paletten oder Containern transportiert werden können. Das Modul 29 in Fig. 6 kann beispielsweise etwa 1,1 m x 0,7 m sein, so dass es auf eine Europalette passt.

Es ist somit nicht nötig, ein komplettes Förderband 3 zu montieren und zu verschiffen. Vielmehr ist durch den modularen Aufbau eine Vormontage von identischen Modulen 29 möglich, ohne dass die Dimensionierung des Förderbandes bereits bekannt sein muss. Je nach Anzahl der benötigten Module 29 werden diese bei Bedarf verschickt und am Ort des Aufstellens des Pasteurs 1 zu einem Förderband 3 zusammengesetzt.

Die aus metallenen Gliedern gebildete Struktur 39, wie sie in Fig. 5 dargestellt ist, ist für den Transport von Flaschen oder Ähnlichem ungeeignet, da die Struktur 39 keine Förderfläche bildet.

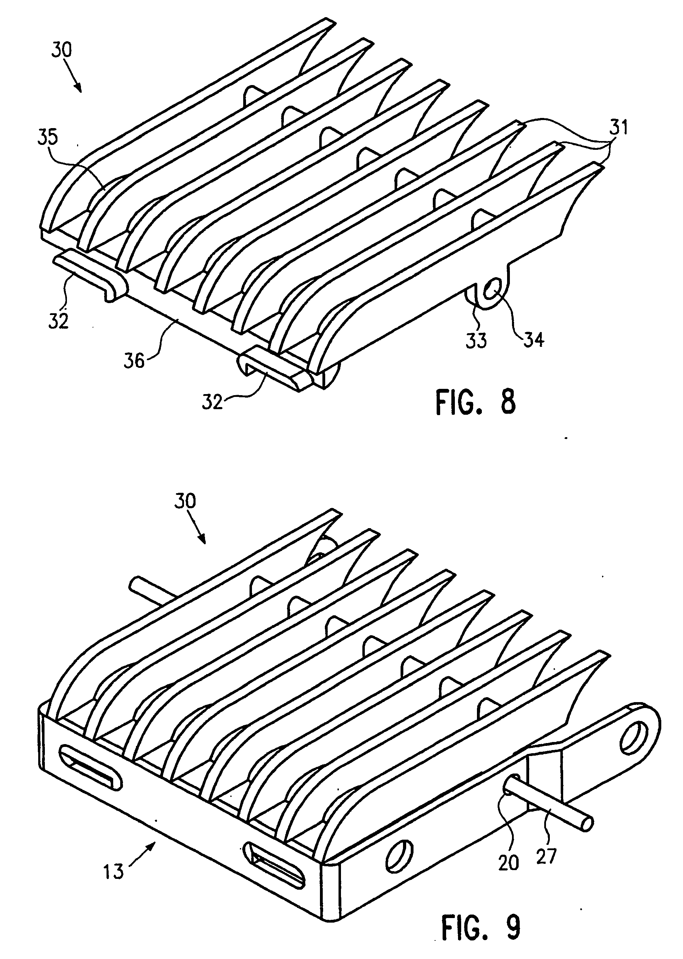

Um eine Förderfläche 38 zu bilden, werden an die aus den metallenen Gliedern 13, 22 gebildete Struktur 39 Kunststoffteile 30, wie sie in Fig. 8 dargestellt sind, angekoppelt.

Das in Fig. 8 dargestellte Kunststoffteil 30 weist Rippen 31 auf, die so ausgebildet sind, dass sie in Förderrichtung verlaufen und so eng beabstandet sind, dass deren Oberfläche zum Transport von Flaschen geeignet ist, also eine Förderfläche bilden. Der Abstand zwischen den Rippen 31 kann beispielsweise zwischen 0,1 und 1 cm oder 0,5 und 1,0 cm liegen.

An dem vorderen Ende 36 des Kunststoffteils 30 sind Vorsprünge 32 angeordnet. Hinter diesen Vorsprüngen 32 ist eine Wölbung 35 an der Unterseite des Kunststoffteils 30 vorgesehen, so dass Platz für eine Rolle 28 (siehe Fig. 5) geschaffen wird.

Weiterhin weist das Kunststoffteil 30 an seiner Unterseite Laschen 33 auf, die jeweils Löcher 34 aufweisen.

In Fig. 9 ist dargestellt, wie das Kunststoffteil 30 mit einem metallenen Glied 13 aus Fig. 3 in Verbindung gebracht wird.

Die Vorsprünge 32 des Kunststoffteils 30 werden in die Aussparungen 17 des U-förmigen Glieds 13, 22 eingesetzt, und weiterhin wird ein Verbindungsstab 27 durch die Öffnungen 20 hindurchgeführt, wobei dieser Verbindungsstab 27 dann auch durch die Löcher 34 des Kunststoffteils 30 hindurchgeht. Der Verbindungsstab 27 kann durch geeignete Mittel gegen ein Verschieben gegenüber den Gliedern 13, 22 gesichert sein.

Die Kunststoffteile 30, die in einer Zeile eines Moduls 29 angeordnet sind, werden somit durch den selben Verbindungsstab 27 gehalten und bilden somit eine Gruppe von Kunststoffteilen 30, die unabhängig von den anderen Kunststoffteilen 30 von der Struktur 39 abgekoppelt werden können.

Durch die Verbindungsstäbe 27 und die Vorsprünge 32 ist das Kunststoffteil 30 somit gut gesichert mit dem metallenen Glied 13 verbunden. Die Aussparungen 17 bzw. die Vorsprünge 32 sowie die Befestigungsstäbe 27 und die Löcher 34 weisen jedoch soviel Spiel auf, dass die unterschiedliche Ausdehnung der verschiedenen Materialien bei Temperaturänderungen, wie sie in dem Pasteur naturgemäß gegeben sind, aufgefangen werden können.

Die Verbindung von Kunststoffteilen 30 mit den Endgliedern 22 ist entsprechend.

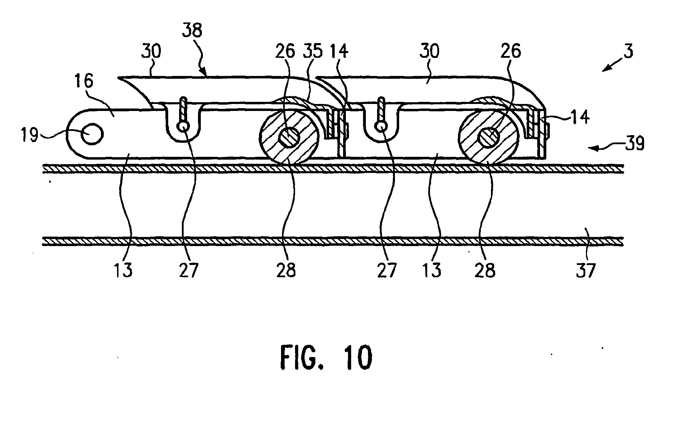

In Fig. 10 ist ein Schnitt durch das Förderband 3 gezeigt. Auf einem Träger 37 liegen die Rollen 28 auf. Durch Rollen 28 verlaufen die Verbindungsstäbe 26, die hier als Achsen ausgebildet sind. Die Verbindungsstangen 26 tragen somit die metallenen Glieder 13, 22, die dabei von dem Träger 37 beabstandet bleiben. Gleichzeitig verbinden die Verbindungsstangen 26 hintereinanderliegende und nebeneinanderliegende metallene Glieder 13 und 22.

Weiterhin sind in Fig. 10 die Kunststoffteile 30 dargestellt. Ein Kunststoffteil 30 weist an seinem hinteren Ende an der Unterseite eine gerundete Aussparung auf, in der eine vordere Rundung des nachfolgenden Kunststoffteils 30 Platz findet. Durch die Kunststoffteile 30 wird somit eine oberhalb der Struktur 39 liegende Förderfläche 38 gebildet.

Die Verbindungsstäbe 27 zur Verbindung der Kunststoffteile 30 mit den Gliedern 13 ist in Fig. 10 ebenfalls dargestellt.

Dadurch, dass das Förderband 3 auf der Unterlage 37 durch die Rollen 28 abrollt und nicht schleift, können deutlich verminderte Reibungskräfte realisiert werden, was den Transport des Förderers 3 und die damit verbundenen Zugkräfte in dem Förderband 3 deutlich vermindert.

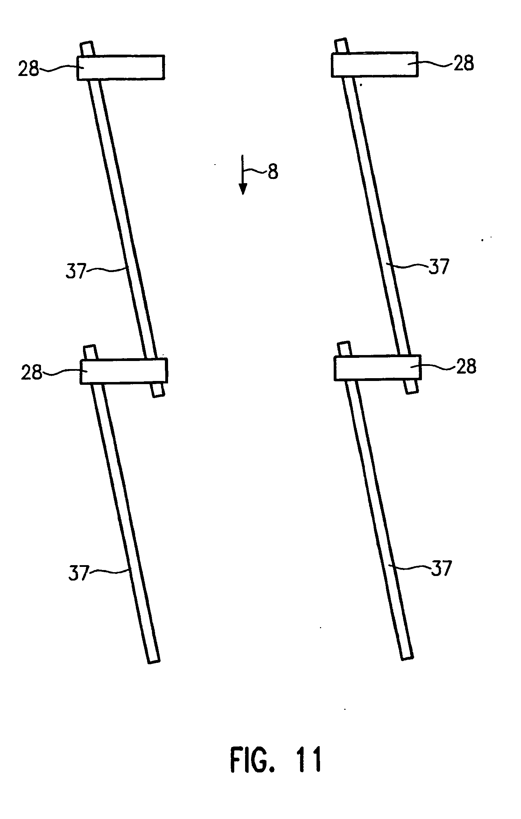

In Fig. 11 ist eine Draufsicht auf die Träger 37 dargestellt. Die Träger 37 verlaufen im Vergleich zu der Förderrichtung 8 leicht schräg gestellt, so dass die Rollen 28 (siehe Fig. 5 und Fig. 10) beim Entlanglaufen eines Trägers 37 immer an verschiedenen Positionen mit dem Träger 37 in Kontakt sind. Dadurch wird verhindert, dass sich in den Rollen 28 durch Verschleiß Nuten oder Ähnliches bilden.

Da in dem Pasteur 1 von oben Wasser mit verschiedenen Temperaturen auf das zu pasteurisierende Gut herabrieselt, muss das Förderband 23 ausreichend wasserdurchlässig sein.

Weiterhin ist es von Vorteil, wenn die Scherben von beispielsweise im Pasteur gebrochenen Glasflaschen durch das Förderband 3 nach unten gelangen können, um so aufgefangen zu werden. Dazu ist die Förderfläche des Förderbands 3 nicht geschlossen sondern weist Öffnungen auf.

Diese Öffnungen sind durch die Kunststoffteile 30 durch die Beabstandung der Rippen 31 gegeben. Die endlose Struktur 39 ist ohnehin genügend weitmaschig.

## Patentansprüche

1. Pasteur (1) mit einem Förderband (3) zum Transport des zu pasteurisierendem Guts (7) wobei das Förderband eine mehrere metallene Glieder (13) umfassende endlose Struktur aufweist, wobei sowohl quer zur Förderrichtung (8) als auch in der Förderrichtung mehrere Glieder (13) vorgesehen sind, wobei an die Struktur (39) mehrere die Förderfläche (38) bildende Kunststoffteile (30) gekoppelt sind, **dadurch gekennzeichnet, dass**
die Glieder (13) eine U-Form mit seitlichen Schenkeln (15, 16) und einem Verbindungsteil (14) aufweisen und in den seitlichen Schenkeln (15, 16) Löcher (18, 19) vorgesehen sind, die dazu dienen, mittels Stäben (26) mehrere Glieder hintereinander zu verbinden.

2. Pasteur nach Anspruch 1, **dadurch gekennzeichnet, dass** mehrere, vorzugsweise mindestens drei, vier, fünf, sechs, acht, zehn, zwölf, fünfzehn oder zwanzig Glieder (13) in Richtung quer zur Förderrichtung (8) vorgesehen sind, die vorzugsweise alle, evtl. mit Ausnahme der Endglieder, identisch sind.

3. Pasteur nach Anspruch 1 oder 2, **dadurch gekennzeichnet, dass** mehrere, vor- zugsweise mindestens drei, vier, fünf, sechs, acht, zehn, zwölf, fünfzehn oder zwanzig Kunststoffteile (30) in Richtung quer zur Förderrichtung (8) vorgesehen sind, die vorzugsweise identisch sind.

4. Pasteur nach einem der Ansprüche 1 bis 3, **dadurch gekennzeichnet, dass** die Kunststoffteile (30) einzeln oder in einer Gruppe von nicht mehr als zehn oder fünf- zehn Kunststoffteilen (30) lösbar an die Struktur (39) gekoppelt sind.

5. Pasteur nach einem der Ansprüche 1 bis 4, **dadurch gekennzeichnet, dass** je metallenem Glied (13, 22) genau ein Kunststoffteil (30) vorgesehen ist.

6. Pasteur nach einem der Ansprüche 1 bis 5, **dadurch gekennzeichnet, dass** die Kunststoffteile (30) an der Förderfläche (38) Rippen (31) aufweisen, die in Förderrichtung (8) orientiert sind.

7. Pasteur nach einem der Ansprüche 1 bis 6, **dadurch gekennzeichnet, dass** die Struktur (39) aus identischen Modulen (29) zusammengesetzt ist, wobei jedes Modul (29) sowohl in Richtung der Förderrichtung (8) als auch in der Richtung quer da- zu mehrere identische Glieder (13) umfasst.

8. Pasteur nach Anspruch 7, **dadurch gekennzeichnet, dass** das Modul (29) an den in Förderrichtung seitlich liegenden Seiten mindestens eine Steckverbindung (23, 24) zum Verbinden des Moduls (29) mit einem anderen Modul (29) aufweist, wobei die Steckverbindung (23,24) vorzugsweise an mehreren Gliedern (22) des Moduls (29) ausgebildet ist.

9. Pasteur nach einem der Ansprüche 1 bis 8, **dadurch gekennzeichnet, dass** die seitlichen Schenkel (15,16) sich in Förderrichtung (8) erstrecken, und der verbindende Teil (14) in Förderrichtung (8) vorne angeordnet ist.

10. Pasteur nach einem der Ansprüche 1 bis 9, **dadurch gekennzeichnet, dass** die Glieder (13,22) eines Moduls (29) durch die quer zur Förderrichtung (8) verlaufende Verbindungsstäbe (26), die durch die Öffnungen (18,19) der Glieder (13) geführt sind, miteinander verbunden sind, so dass sie gegeneinander verdrehbar sind.

11. Pasteur nach Anspruch 10, **dadurch gekennzeichnet, dass** die Verbindungsstäbe (26) eine Länge aufweisen, die der Breite eines Moduls (29) entspricht.

12. Pasteur nach einem der Ansprüche 1 bis 11, **dadurch gekennzeichnet, dass** die Kunststoffteile (30) durch Befestigungsstäbe (27) und/oder Steckverbindungen (17, 32) an einem Glied (13,22) befestigt sind, wobei die Befestigungsstäbe (27) vor- zugsweise eine Länge haben, die der Breite eines Moduls (29) entspricht.

13. Pasteur nach einem der Ansprüche 1 bis 12, **dadurch gekennzeichnet, dass** die Struktur (39) an der der Förderfläche (38) entgegengesetzten Seite Rollen (28) aufweist, die vorzugsweise auf den Verbindungsstäben (26) aufgezogen sind.

14. Pasteur nach Anspruch 13, **dadurch gekennzeichnet, dass** die Rollen (28) auf Trägern (37) abrollen können, so dass bei dem Entlangrollen einer Rolle (28) entlang des Trägers (37) der Träger (37) und die Rolle (28) an verschiedenen Stellen entlang der Achse der Rolle (28) Kontakt aufweisen.

15. Pasteur nach einem der Ansprüche 1 bis 14, **dadurch gekennzeichnet, dass** Walzen (9,10) vorgesehen sind, um die das Förderband (3) geführt wird, wobei die Walzen (9,10) vorzugsweise ausschließlich in die metallenen Glieder (13,22) greifen, um das Förderband (3) anzutreiben.

16. Förderband, insbesondere für einen Pasteur, das eine mehrere metallene Glieder (13) umfassende endlose Struktur (39) aufweist, wobei sowohl quer zur Förderrichtung (8) als auch in der Förderrichtung mehrere Glieder (13) vorgesehen sind, wobei an die Struktur (39) mehrere die Förderfläche (38) bildende Kunststoffteile (30) gekoppelt sind,
**dadurch gekennzeichnet, dass**
die Glieder (13) eine U-Form mit seitlichen Schenkeln (15, 16) und einem Verbindungsteil (14) aufweisen und in den seitlichen Schenkeln (15, 16) Löcher (18, 19) vorgesehen sind, die dazu dienen, mittels Stäben (26) mehrere Glieder hintereinande zu verbinden.

## Claims

1. Pasteurizer (1) with a conveyor belt (3) for transporting the goods (7) to be pasteurized, whereby the conveyor belt comprising an endless structure comprising several metallic elements (13), whereby transverse to the conveying direction (8) as well as in the conveying direction several elements (13) are provided, whereby several plastic components (30) are coupled to structure (39) that form the conveyor surface (38), **characterized in, that**
the elements (13) have a U-shape with lateral legs (15, 16) and a connection part (14) and in the lateral legs (15, 16) holes (18, 19) are provided for connecting several elements with each other sequentially, by means of slats (26).

2. Pasteurizer according to Claim 1, **characterized in, that** several, preferably at least three, four, five, six, eight, ten, twelve, fifteen or twenty elements (13) are provided in the direction transverse to the conveying direction (8), all of which are preferably identical, perhaps with the exception of the end elements.

3. Pasteurizer according to claim 1 or 2, **characterized in, that** several, preferably at least three, four, five, six, eight, ten, twelve, fifteen or twenty plastic components (30) are provided in the direction transverse to the conveying direction (8), which are preferably identical.

4. Pasteurizer according to one of claims 1 to 3, **characterized in, that** the plastic components (30) are coupled detachable to the structure (39) individually, or in a group of not more than ten or fifteen plastic components (30).

5. Pasteurizer according to one of claims 1 to 4, **characterized in, that** for each metallic element (13, 22) precisely one plastic component (30) is provided.

6. Pasteurizer according to one of claims 1 to 5, **characterized in, that** the plastic components (30) are provided with ribs (31) on the conveyor surface (38) that are aligned in the conveying direction (8).

7. Pasteurizer according to one of claims 1 to 6, **characterized in, that** the structure (39) consists of identical modules (29), whereby each module (29) comprises several identical elements (13) in the direction of the conveying direction (8), as well as in the direction that is transverse to such.

8. Pasteurizer according to Claim 7, **characterized in, that** the module (29), at the sides lateral to the conveying direction has at least one plug connection (23, 24) for connecting the module (29) with another module (29), whereby the plug connection (23, 24) is preferably formed at several elements (22) of the module (29).

9. Pasteurizer according to one of claims 1 to 8, **characterized in, that** the lateral legs (15, 16) extend in the conveying direction (8), and the connecting part (14) is mounted in the front in the conveying direction (8).

10. Pasteurizer according to one of claims 1 to 9, **characterized in, that** the elements (13, 22) of a module (29) are connected with each other by means of the connecting slats (26) extending transversely to the conveying direction (8), which are guided through the openings (18, 19) of elements (13), so that they can be rotated with respect to each other.

11. Pasteurizer according to Claim 10, **characterized in, that** the connecting slats (26) have a length that corresponds to the width of a module (29).

12. Pasteurizer according to one of claims 1 to 11, **characterized in, that** the plastic components (30) are fixated by means of fastening slats (27) and/or plug connections (17, 32) at an element (13, 22), whereby the fastening slats (27) preferably have a length that corresponds to the width of a module (29).

13. Pasteurizer according to one of claims 1 to 12, **characterized in, that** the structure (39) comprises rollers (28) at the side opposite to the conveyer surface (38), that are preferably mounted on the connecting slats (26).

14. Pasteurizer according to Claim 13, **characterized in, that**, the rollers (28) can roll on carriers (37), so that when a roller (28) rolls along carrier (37), the carrier (37) and the roller (28) have contact at various positions along the axis of roller (28).

15. Pasteurizer according to one of claims 1 to 14, **characterized in, that** cylinders (9, 10) are provided, around which the conveyor belt (3) is guided, whereby the cylinders (9, 10) preferably engage exclusively with the metallic elements (13, 22), in order to drive the conveyor belt (3).

16. Conveyor belt, in particular for a pasteurizer, that has an endless structure (39) comprising several metallic elements (13), whereby transverse to the conveying direction (8) as well as in the conveying direction, several elements (13) are provided, whereby several plastic components (30) are coupled to the structure (39) that form the conveyor surface (38),
**characterized in, that**
the elements (13) have a U-shape with lateral legs (15, 16) and a connection part (14), and in the lateral legs (15, 16), holes (18, 19) are provided for connecting several elements sequentially by means of slats (26).

## Revendications

1. Pasteurisateur (1) à bande transporteuse (3) pour le transport du produit (7) à pasteuriser, dans lequel la bande transporteuse présente une structure sans fin comprenant plusieurs maillons métalliques (13), plusieurs maillons (13) sont prévus aussi bien transversalement à la direction de transport (8) que dans la direction de transport, plusieurs éléments en matière plastique (30), qui forment la surface de transport (38), sont couplés à la structure (39), **caractérisé en ce que** les maillons (13) présentent une forme en U avec des branches latérales (15, 16) et un élément de jonction (14), et des trous (18, 19) sont prévus dans les branches latérales (15, 16), lesquels servent à assembler entre eux plusieurs maillons au moyen de tiges (26).

2. Pasteurisateur suivant la revendication 1, **caractérisé en ce que** plusieurs, de préférence au moins trois, quatre, cinq, six, huit, dix, douze, quinze ou vingt maillons (13) sont prévus dans la direction transversale à la direction de transport (8), lesquels sont de préférence tous identiques, éventuellement à l'exception des maillons terminaux.

3. Pasteurisateur suivant l'une des revendications 1 et 2, **caractérisé en ce que** plusieurs, de préférence au moins trois, quatre, cinq, six, huit, dix, douze, quinze ou vingt éléments en matière plastique (30) sont prévus dans la direction transversale à la direction de transport (8), lesquels sont de préférence identiques.

4. Pasteurisateur suivant l'une des revendications 1 à 3, **caractérisé en ce que** les éléments en matière plastique (30) sont couplés de façon amovible à la structure (39), individuellement ou en un groupe de pas plus de dix ou de quinze éléments en matière plastique (30).

5. Pasteurisateur suivant l'une des revendications 1 à 4, **caractérisé en ce qu'**exactement un élément en matière plastique (30) est prévu par maillon métallique (13, 22).

6. Pasteurisateur suivant l'une des revendications 1 à 5, **caractérisé en ce que** les éléments en matière plastique (30) présentent sur la surface de transport (38) des nervures (31) orientées dans la direction de transport (8).

7. Pasteurisateur suivant l'une des revendications 1 à 6, **caractérisé en ce que** la structure (39) est constituée de modules identiques (29), chaque module (29) comprenant plusieurs maillons (13) identiques aussi bien dans la direction de transport (8) que dans la direction transversale à cette dernière.

8. Pasteurisateur suivant la revendication 7, **caractérisé en ce que** le module (29) présente, sur les côtés latéraux dans la direction de transport, au moins un assemblage à emboîtement (23, 24) pour l'assemblage du module (29) avec un autre module (29), l'assemblage à emboîtement (23, 24) étant réalisé de préférence sur plusieurs maillons (22) du module (29).

9. Pasteurisateur suivant l'une des revendications 1 à 8, **caractérisé en ce que** les branches latérales (15, 16) s'étendent dans la direction de transport (8), et l'élément de jonction (14) est disposé à l'avant dans la direction de transport (8).

10. Pasteurisateur suivant l'une des revendications 1 à 9, **caractérisé en ce que** les maillons (13, 22) d'un module (29) sont assemblés entre eux par les tiges d'accouplement (26), qui s'étendent transversalement à la direction de transport (8) et sont guidées au travers des ouvertures (18, 19) des maillons (13), de sorte que les maillons peuvent tourner les uns par rapport aux autres.

11. Pasteurisateur suivant la revendication 10, **caractérisé en ce que** les tiges d'accouplement (26) présentent une longueur, qui correspond à la largeur d'un module (29).

12. Pasteurisateur suivant l'une des revendications 1 à 11, **caractérisé en ce que** les éléments en matière plastique (30) sont fixés sur un maillon (13, 22) par des tiges de fixation (27) et/ou des assemblages à emboîtement (17, 32), les tiges de fixation (27) ayant de préférence une longueur qui correspond à la largeur d'un module (29).

13. Pasteurisateur suivant l'une des revendications 1 à 12, **caractérisé en ce que** la structure (39) présente, sur le côté opposé à la surface de transport (38), des rouleaux (28) qui sont emmanchés de préférence sur les tiges d'accouplement (26).

14. Pasteurisateur suivant la revendication 13, **caractérisé en ce que** les rouleaux (28) peuvent rouler sur des supports (37) de sorte que, lors du roulement d'un rouleau (28) le long du support (37), le support (37) et le rouleau (28) sont en contact en différents endroits le long de l'axe du rouleau (28).

15. Pasteurisateur suivant l'une des revendications 1 à 14, **caractérisé en ce que** sont prévus des cylindres (9, 10) autour desquels est guidée la bande transporteuse (3), les cylindres (9, 10) s'engageant de préférence exclusivement dans les maillons métalliques (13, 22) pour entraîner la bande transporteuse (3).

16. Bande transporteuse, en particulier pour un pasteurisateur, qui présente une structure sans fin (39) comprenant plusieurs maillons métalliques (13), plusieurs maillons (13) étant prévus aussi bien transversalement à la direction de transport (8) que dans la direction de transport, plusieurs éléments en matière plastique (30), qui forment la surface de transport (38), étant couplés à la structure (39), **caractérisée en ce que** les maillons (13) présentent une forme en U avec des branches latérales (15, 16) et un élément de jonction (14), et des trous (18, 19) sont prévus dans les branches latérales (15, 16), lesquels trous servent à assembler entre eux plusieurs maillons au moyen de tiges (26).
